# EUROPÄISCHE PATENTSCHRIFT

(11) **EP 2 857 175 B1**
(45) Veröffentlichungstag und Bekanntmachung des Hinweises auf die Patenterteilung: **11.04.2018**
(21) Anmeldenummer: 14155388.3
(22) Anmeldetag: 17.02.2014
(51) Int. Cl.: B29C 53/04, B29C 47/00, B29C 47/02, E04F 19/04

(54) **Vorrichtung zur Herstellung eines werkseitig vorgefertigten Wandhochzuges**
Device for producing a prefabricated coving
Dispositif de fabrication d'une remontée de plinthe préfabriquée en usine

(30) Priorität: 07.10.2013 AT 5013713 U
(43) Veröffentlichungstag der Anmeldung: 08.04.2015
(73) Patentinhaber: Prossegger, Walfred, 9210 Pörtschach (AT)
(72) Erfinder: Prossegger, Walfred, 9210 Pörtschach (AT)
(74) Vertreter: Staudt, Armin Walter

(56) Entgegenhaltungen:
- EP-B1- 1 514 979
- AT-U1- 7 316
- DE-A1- 3 522 420
- GB-A- 721 086

## Beschreibung

### Technischer Hintergrund

Die vorliegende Erfindung betrifft eine Vorrichtung zur Herstellung eines fabrikmäßig vorgefertigten Wandhochzuges in der Art einer Hohlkehlsockelleiste für Bodenbeläge aus Kunststoff, PVC, Kautschuk, Linoleum oder artverwandten Stoffen zur Herstellung eines feuchtigkeitsdichten Wandabschlusses,
- mit einer Formgebungseinheit, die über einen Einlass für einen maschinell erzeugten streifenförmigen Zuschnitt aus dem Belagsmaterial und über eine Biegeeinheit zur Ausprägung eines konvexen Biegungsbereichs im streifenförmigen Zuschnitt entlang seiner Streifen-Längsachse verfügt,
- und mit einer Schmelz- und Auftragseinheit zum Aufbringen eines dauerelastischen Kantenstützkeils auf dem konvexen Biegungsbereich des streifenförmigen Zuschnitts.

### Stand der Technik

Derartige Beläge werden auf schwimmenden Estrichen oder auf Verbund-Estrichen verlegt. Zwischen dem Estrich-Belag und dem angrenzenden Mauerwerk ist es erforderlich, eine absolut feuchtigkeitsdichte Verbindung des Oberbelages zu schaffen, welche weder durch Wärmeausdehnung, noch durch Schrumpfung bei Kälte, noch durch mechanische Belastungen, etwa durch Bodenreinigungsmaschinen ihre absolute Dichtheit verliert.

Wischbare Bodenbeläge mit Wandhochzügen werden hauptsächlich in öffentlichen Gebäuden verwendet und müssen aus hygienischen Gründen absolut feuchtigkeitsdicht ausgebildet sein. Die Pflege der Böden, welche ebenfalls aus hygienischen Gründen täglich erforderlich ist, erfolgt hier grundsätzlich mit Reinigungsmaschinen, welche bei unsachgemäßer Handhabung die Hohlkehle des Wandhochzuges beschädigen können. Durch die Verstärkung der Wandhochzüge im Biegebereich mittels Unterlegkeilen, wird dieser Bereich stoß- und druckfester und damit weniger leicht mechanisch beschädigt.

Die Verbindung zwischen dem Bodenbelag, der den Estrich abdeckt und dem Mauerwerk wird durch einen Belagstreifen hergestellt, welcher einerseits auf dem Estrich geklebt und mit dem Belag des Estrich verschweißt und andererseits mit dem Mauerwerk verklebt wird, wobei dieses Mauerwerk über eine vorbestimmte Höhe von diesem Belagstreifen überdeckt wird.

Da besonders der Übergangsbereich von Estrich zu Mauerwerk, welcher bei schwimmenden Estrichen eine Dehnungsfuge z.B. aus Styropor aufweist, eine Schwachstelle insbesondere für mechanische Beschädigungen darstellt, wird in diesem Bereich der Belagstreifen auf seiner Rückseite durch einen durchgehenden keilförmigen Stützkörper unterstützt. Damit können stoßartige Belastungen in diesem Bereich abgeschwächt und ein Einreißen verhindert werden.

Dieser Wandhochzug wird üblicherweise so hergestellt, dass in den gereinigten Übergangsbereich von Estrich zu Mauerwerk zuerst der keilförmige Stützkörper angebracht wird. Dieser meist aus PVC bestehende Stützkörper wird in Rollen zu mehreren Metern zur Baustelle verbracht und muss vor seiner Montage erst auf lineare Form gebracht werden. Üblicherweise geschieht dies durch leichtes anwärmen, beispielsweise mit einem Handföhn.

Sobald der Stützkörper in der erforderlichen Länge zugeschnitten und linear ausgerichtet ist, werden die den Estrich und die Wand berührenden Flächen mit Klebermasse bestrichen und an die entsprechenden Stellen gepresst. Anschließend wird das Belagsmaterial auf der Baustelle in Streifen geschnitten, mit Klebermasse bestrichen, mittels Handföhn oder Gaskartusche gewärmt und auf dem Estrich, am Stützkörper und an der Wand aufgeklebt, um schließlich mit dem ebenen Belag auf dem Estrich im Stoß verschweißt zu werden.

Eine Weiterentwicklung dieses Verfahrens ist in der EP 1 514 979 B1 beschrieben. Darin ist ein Herstellungsverfahren für einen Wandhochzug für Bodenbeläge aus PVC, Kautschuk, Linoleum oder artverwandten Stoffen beschrieben, welcher in nur zwei Arbeitsschritten auf der Baustelle montiert werden kann.

Der Bodenbelag wird dabei werksseitig zu Streifen zugeschnitten, entlang seiner Längsachse im rechten Winkel gebogen und im äußeren Kantenbereich mit einem Kantenstützmaterial, bevorzugt aus dauerelastischem Kunststoff beschichtet. Der solcherart werksseitig vorbereitete Wandhochzug wird auf der Baustelle lediglich auf dem Estrich und an der Wand angeklebt und sodann mit dem ebenen Bodenbelag verschweißt. Eine separate Anbringung eines Stützkörpers entfällt zur Gänze. Weiters entfällt der händische Streifenzuschnitt auf der Baustelle, da ein werksseitiger Streifenzuschnitt schneller und mit höherer Genauigkeit maschinell erfolgen kann.

Auf diese Weise wird die Stelle zwischen dem Estrich und dem Mauerwerk durch den Wandhochzug mit dem Kantenstützkeil optimal überbrückt, damit keine Schäden am Belag - beispielsweise durch Reinigungsmaschinen - entstehen können.

Die solcherart werkseitig vorbereiteten Wandhochzüge werden im gestreckten Zustand an einem Stützkörper befestigt, welcher zugleich Teil der Verpackung sein kann, zur Einbaustelle befördert und können dort ohne weitere Bearbeitung direkt befestigt werden. Lediglich im Bereich von Wandkanten ist eine Ablängung mit Gehrungsschnitt erforderlich, so wie beim herkömmlichen Verfahren auch.

Mit diesem Wandhochzug wird, aufgrund seiner höheren Qualität - es können sich beispielsweise keine Wellen oder Spannungen durch unsachgemäße Verklebung bilden, die Lebensdauer des Wandabschlusses um ein vielfaches verlängert. Ein weiterer Vorteil liegt darin, dass etwa 50 % der Arbeitszeit auf der Baustelle entfallen, wodurch der Montagepreis erheblich gesenkt werden kann. Durch die geringere körperliche Anstrengung sind auch positive Auswirkungen auf die Gesundheit der Bodenleger zu erwarten.

In der EP 1 514 979 B1 wird jedoch eine zur werksseitigen Herstellung des Wandhochzuges geeignete Vorrichtung nur am Rande und ohne konstruktive Einzelheiten erwähnt.

Aus der DE 35 22 420 A1 ist ein Verfahren zur Herstellung von vorgefertigten Sockeleckstücken aus thermoplastischem Material bekannt, bei dem ein Abschnitt eines Sockelleistenprofil erwärmt, verformt und anschließend abgekühlt wird. Zur Formgebung wird vorgeschlagen, eine Matrize und eine Patrize zu verwenden.

Die Druckschrift GB 721 086 A lehrt ein Verfahren zur Herstellung eines Linoleum-Eckstücks aus einem Linoleum-Stück, sowie eine Vorrichtung zur Durchführung des Verfahrens. Bei dem Verfahren wird das Linoleum-Stück eingeschnitten, erwärmt, zu einem Eckstück gebogen und im Biegungsbereich erwärmt.

### Technische Aufgabenstellung

Die vorliegende Erfindung stellt sich daher die Aufgabe, eine Vorrichtung anzugeben, die zur Herstellung eines derartigen Wandhochzuges geeignet ist, insbesondere eines Wandhochzuges gemäß der EP 1 514 979 B1. Das Werkstück, ein streifenförmiger Zuschnitt aus einem Bodenbelagsmaterial aus PVC, Kautschuk, Linoleum oder artverwandten Stoffen, wird in einem Arbeitsschritt entlang seiner Längsachse in definierter Art gebogen und entlang der konvexen Krümmungsfläche mit einem Kantenstützkeil aus dauerelastischem Kunststoff oder aus Schmelzkleber in einer definierten Form und Stärke beaufschlagt.

### Allgemeine Darstellung der Erfindung

Diese Aufgabe wird ausgehend von einer Vorrichtung der eingangs genannten Gattung erfindungsgemäß dadurch gelöst, dass die Schmelz- und Auftragseinheit ein über eine Transporteinrichtung für den streifenförmigen Zuschnitt mit der Formgebungseinheit verbundenes Kantenstützkeil-Formprofil aufweist, welches aus schmelzflüssigem Kunststoff oder Schmelzkleber den Kantenstützkeil formt, kalibriert und gleichzeitig an der konvexen Krümmung des streifenförmigen Zuschnitts anbringt.

Damit ergibt sich der Vorteil, dass der Wandhochzug fabrikmäßig vorgefertigt wesentlich schneller und mit größerer Präzision hergestellt werden kann, als dies auf der Baustelle erfolgen könnte.

Die erfindungsgemäße Vorrichtung besteht aus der Kombination einer Formgebungseinheit für den streifenförmigen Zuschnitt und einer Schmelz- und Auftragseinheit für einen bei Raumtemperatur dauerelastischen, formbeständigen Kunststoff oder Schmelzkleber, welcher mittels eines erfindungsgemäßen Kantenstützkeil-Formprofils geformt und kalibriert wird. Dabei bildet eine Transporteinheit die funktionale Verbindung zwischen der Formgebungseinheit und dem Kantenstützkeil-Formprofil, wobei die Steuerung der Transportgeschwindigkeit abhängig von der Art des Bodenbelagsmaterials, der Art des formbeständigen Kunststoffs oder Schmelzklebers und von dessen Auftragstemperatur gesteuert ist. Der streifenförmige Zuschnitt verlässt die erfindungsgemäße Vorrichtung bereits in seiner endgültigen Form oder wird zur weiteren Abkühlung in einer Abkühlform zwischengelagert bevor er versandfertig verpackt wird.

Weitere vorteilhafte Weiterentwicklungen sind Gegenstand der abhängigen Ansprüche.

### Ausführungsbeispiel

Die erfindungsgemäße Vorrichtung wird nachstehend anhand der Figuren näher erläutert, wobei sich die Figuren nur auf eine bevorzugte Ausführungsvariante beziehen. Es versteht sich daher von selbst, dass die Erfindung nicht exakt auf die in den Figuren dargestellte Variante beschränkt ist, sondern auch Variationen beinhaltet, welche die Merkmale des Hauptanspruchs aufweisen.

In den Figuren zeigt:
- **Fig. 1**: eine Schrägansicht der Vorrichtung von vorne,
- **Fig. 2**: einen schematischen Schnitt durch die Auftragsvorrichtung für flüssigen Kunststoff bzw. Schmelzkleber,
- **Fig. 3**: eine Schrägansicht des erfindungsgemäßen Kantenstützkeil-Formprofils.

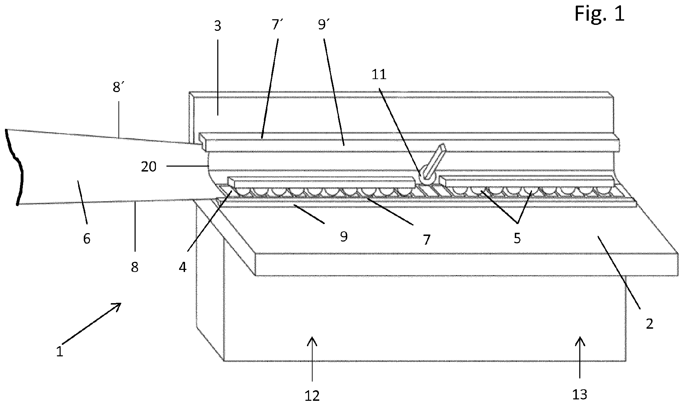

Gemäß **Fig. 1** besteht die Formgebungseinheit 1 aus einem waagrechten Transporttisch 2, der an einem senkrechten Bauteil 3 anschließt. Im Transporttisch 2 läuft eine endlos umlaufende Transportkette 4, welche im Zusammenwirken mit über der Transportkette 4 angeordneten Anpressrollen 5 den streifenförmigen Zuschnitt 6 durch die Formgebungseinheit 1 transportiert. Dabei liegt der streifenförmige Zuschnitt 6 mit seinen Längskanten 8, 8'an zwei im rechten Winkel zueinander ausgerichteten Führungsprofilen 7,7' an. Das erste Führungsprofil 7 ist neben der Transportkette 4 angeordnet. Das zweite Führungsprofil 7' ist am senkrechten Bauteil 3 vorgesehen. Die L-förmigen Führungsprofile 7, 7' sind mittels nicht dargestellter Stellelemente exakt auf die gewünschten Schenkelhöhen des herzustellenden Wandhochzuges und den gewünschten Krümmungsradius einstellbar und umgreifen mit ihrem freiliegenden Profilschenkel 9, 9' die Längskanten 8, 8' des streifenförmigen Zuschnitts 6.

Der streifenförmige Zuschnitt 6 wird mit seiner Stirnkante 20 seitlich in die Führungsprofile 7, 7' eingeschoben, wobei der streifenförmige Zuschnitt 6 bereits eine Krümmung erfährt, bis die Stirnkante 20 des streifenförmigen Zuschnitts 6 zwischen der Transportkette 4 und den Anpressrollen 5 erfasst und von der Transportkette 4 weiter durch die Formgebungseinheit 1 transportiert wird.

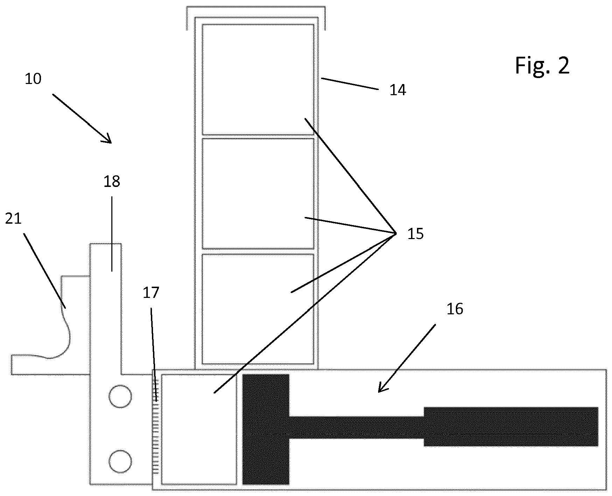

In weiterer Folge bewegt die Transportkette 4 den streifenförmigen Zuschnitt 6 an einem hinter dem streifenförmigen Zuschnitt 6 liegenden Kantenstützkeil-Formprofil 21 vorbei, wobei - wie in **Fig. 2** dargestellt - das Kantenstützkeil-Formprofil 21 Teil einer Auftragseinheit 10 für schmelzflüssigen Kunststoff oder Schmelzkleber ist, und wobei der streifenförmige Zuschnitt 6 durch eine weitere Anpressrolle 11 seinen endgültigen Krümmungsradius erhält, bevor der streifenförmige Zuschnitt 6 die Vertiefung 22 des Kantenstützkeil-Formprofils 21 passiert. Im Bereich der Vertiefung 22 wird der streifenförmige Zuschnitt 6 im konvexen Krümmungsbereich mit dem Kantenstützkeil aus dauerelastischem Kunststoff bzw. Schmelzkleber beaufschlagt, bevor der streifenförmige Zuschnitt 6 durch die Transportkette 4 aus der Formgebungsvorrichtung 1 heraus bewegt wird.

In einer vorteilhaften Ausführung der Erfindung sind die Führungsprofile 7, 7' zueinander leicht konisch verlaufend eingestellt, sodass der Krümmungsradius des streifenförmigen Zuschnitts 6 während des Transports zur Auftragseinheit 10 für den flüssigen Kunststoff bzw. den Schmelzkleber kontinuierlich reduziert wird. Dies wird erreicht, indem entweder eine oder beide Führungsprofile 7, 7' bis zur Auftragseinheit 10 geringfügig zueinander geneigt sind.

Abhängig von der Zusammensetzung und Beschaffenheit des streifenförmigen Zuschnitts 6 kann es erforderlich sein, den streifenförmigen Zuschnitt 6 entweder vor seinem Einschub in die Formgebungsvorrichtung 1 oder innerhalb eines ersten Abschnitts 12 der Formgebungsvorrichtung 1 vor der Auftragseinheit 10 durch geeignete, hier nicht dargestellte Einrichtungen zu erwärmen.

In einer Weiterentwicklung der Erfindung besitzt die Formgebungseinrichtung 1 einen zweiten Abschnitt 13 nach der Auftragseinheit 10, in welchem eine Abkühlzone für den streifenförmigen Zuschnitt 6 vorgesehen sein kann.

In der Praxis hat es sich als vorteilhaft erwiesen, die streifenförmigen Zuschnitte 6 nach dem Verlassen der Formgebungseinheit 1 für einige Zeit in einer Winkelform zu lagern, um vorhandene Spannungen im streifenförmigen Zuschnitt 6 abklingen und den Kantenstützkeil aus noch warmem und daher verformbarem schmelzflüssigen Kunststoff oder Schmelzkleber soweit abkühlen zu lassen, bis der Kantenstützkeil seine Form behält und der Wandhochzug nur noch durch mechanische Belastung verformbar ist.

Die in **Fig. 2** schematisch im Schnitt dargestellte Auftragseinheit 10 für den erhitzen, flüssigen Kunststoff oder Schmelzkleber setzt sich aus einer Vorratskammer 14 für die Bevorratung des Ausgangsmaterials 15 des den Kantenstützkeil ausbildenden Kunststoffs oder Schmelzklebers, einer mit Druck beaufschlagten Transporteinrichtung 16 für das Ausgangsmaterial 15, einer Schmelzplatte 17, einem Heizblock 18 mit durchgängigen Bohrungen für den schmelzflüssigen Kunststoff zu den Auftragsdüsen 19 und einem Kantenstützkeil-Formprofil 21 zusammen.

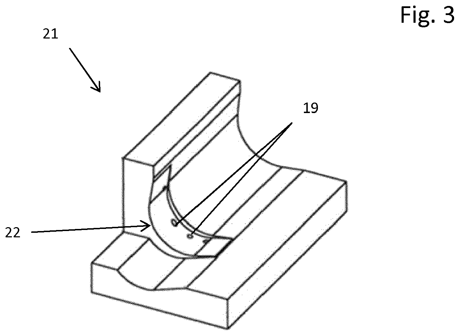

Die Auftragsdüsen 19 münden bevorzugt in einer Ausnehmung 22 des in **Fig. 3** separat dargestellten Kantenstützkeil-Formprofils 21. Der durch die Ausnehmung 22 im Kantenstützkeil-Formprofil 21 entstehende Hohlraum zwischen der konvexen Krümmung des streifenförmigen Zuschnitts 6 und der Oberfläche des Kantenformprofils 21 ist entsprechend der gewünschten Form und Dicke des Kantenstützkeils geformt und wird durch den Druck von der Transporteinrichtung 16 vom schmelzflüssigen Kunststoff bzw. Schmelzkleber vollständig ausgefüllt, wodurch der schmelzflüssige Kunststoff bzw. Schmelzkleber an der konvexen Krümmung des streifenförmigen Zuschnitts 6 anhaftet und zum dauerelastischen Kantenstützkeil erstarrt.

Es sind unterschiedlichste Belagsarten für Kunststoffböden bekannt, welche sich sowohl in ihrer stofflichen Zusammensetzung, als auch in ihrer Materialstärke und eventuell vorhandenen zusätzlichen Beschichtungen voneinander mehr oder minder stark unterscheiden. Mit der erfindungsgemäßen Vorrichtung können aus streifenförmigen Zuschnitten aller bekannten Kunststoff-Belagsarten die gewünschten Wandhochzüge mit beliebiger Schenkellänge hergestellt werden, wobei jedoch für jeden Belag die eventuell erforderliche Vorwärmung, die Auftragstemperatur des schmelzflüssigen Kunststoffs oder Schmelzklebers und die Durchlaufzeit des streifenförmigen Zuschnitts unterschiedlich sind. In einer weiteren bevorzugten Ausführung der Erfindung ist die erfindungsgemäße Vorrichtung mit einer Steuerungs- und Regeleinrichtung ausgestattet, welche über eine Dateneingabevorrichtung und einen Datenspeicher verfügt und in welcher alle erforderlichen Daten für jeden einzelnen Belag abspeicherbar und für die Steuerung und Regelung der Vorrichtung abrufbar sind.

Durch die Steuerung der Geschwindigkeit der Transportkette 4 und die Steuerung der Auftragstemperatur des schmelzflüssigen Kunststoffs bzw. Schmelzklebers gelangt genau diejenige Masse an schmelzflüssigem Kunststoff bzw. Schmelzkleber in die Ausnehmung 22 des Kantenstützkeil-Formprofils 21 die erforderlich ist, um einen volumenmäßig vollständig ausgebildeten Kantenstützkeil zu erzeugen, ohne dass es zu einem unkontrollierten Austritt von überschüssigem schmelzflüssigen Kunststoff bzw. Schmelzkleber neben dem Kantenstützkeil-Formprofils 21 kommt.

In einer weiteren Variante der Erfindung sind Einrichtungen zur Erfassung und Weiterleitung von Betriebskennzahlen an eine Datenverarbeitungseinheit vorgesehen.

Die Vorteile der erfindungsgemäßen Vorrichtung liegen insbesondere darin, dass diese Vorrichtung in der Lage ist mit hoher Präzision in einer ergonomisch für das Bedienpersonal wenig belastenden Weise fabrikmäßig vorgefertigte Wandhochzüge wesentlich schneller und mit reproduzierbarer Qualität herzustellen.

## Patentansprüche

1. Vorrichtung zur Herstellung eines fabrikmäßig vorgefertigten Wandhochzuges in der Art einer Hohlkehlsockelleiste für Bodenbeläge aus Kunststoff, PVC, Kautschuk, Linoleum oder artverwandten Stoffen zur Herstellung eines feuchtigkeitsdichten Wandabschlusses,
• mit einer Formgebungseinheit (1), die über einen Einlass für einen maschinell erzeugten streifenförmigen Zuschnitt (6) aus dem Belagsmaterial und über eine Biegeeinheit zur Ausprägung eines konvexen Biegungsbereichs im streifenförmigen Zuschnitt (6) entlang seiner Streifen-Längsachse verfügt,
• und mit einer Schmelz- und Auftragseinheit (10), zum Aufbringen eines dauerelastischen Kantenstützkeils auf dem konvexen Biegungsbereich des streifenförmigen Zuschnitts (6),
**dadurch gekennzeichnet, dass** die Schmelz- und Auftragseinheit (10) ein über eine Transporteinrichtung (4) für den streifenförmigen Zuschnitt (6) mit der Formgebungseinheit (1) verbundenes Kantenstützkeil-Formprofil (21) aufweist, welches aus schmelzflüssigem Kunststoff oder Schmelzkleber den Kantenstützkeil formt, kalibriert und gleichzeitig an der konvexen Krümmung des streifenförmigen Zuschnitts (6) anbringt.

2. Vorrichtung nach Anspruch 1, **dadurch gekennzeichnet, dass** die Formgebungseinheit (1) einen waagrechten Transporttisch (2), ein zum Transporttisch (2) senkrecht angeordnetes Bauteil (3) und eine endlos umlaufende, unidirektionale Transporteinrichtung aufweist.

3. Vorrichtung nach Anspruch 2, **dadurch gekennzeichnet, dass** die unidirektionale Transporteinrichtung als Förderkette (4) ausgeführt ist.

4. Vorrichtung nach Anspruch 3, **dadurch gekennzeichnet, dass** die Formgebungseinheit (1) mit - mit der Förderkette (4) in Wirkverbindung stehenden - ersten Anpressrollen (5), einem Führungsprofil (7) am Transporttisch (2) neben der Förderkette (4) und einem weiteren Führungsprofil (7') am senkrechten Bauteil (3) ausgestattet ist.

5. Vorrichtung nach Anspruch 4, **dadurch gekennzeichnet, dass** die beiden Führungsprofile (7, 7') L-förmig ausgebildet sind und über Stellelemente auf vorgegebene Schenkelbreiten und den vorgegebenen Krümmungsradius des Wandhochzugs einstellbar sind.

6. Vorrichtung nach Anspruch 5, **dadurch gekennzeichnet, dass** die freiliegenden Profilschenkel (9, 9') der Führungsprofile (7, 7') zum Umgreifen der Längskanten (8, 8') des streifenförmigen Zuschnitts (6) ausgebildet sind.

7. Vorrichtung nach einem der vorhergehenden Ansprüche, **dadurch gekennzeichnet, dass** die Schmelz- und Auftragseinheit (10) mit einer Vorratskammer (14) für die Bevorratung eines Ausgangsmaterials für den bei Raumtemperatur formstabilen und dauerelastischen Kunststoff oder Schmelzkleber, einer mit Druck beaufschlagbaren Zufuhreinrichtung für das Ausgangsmaterial (15), einer Schmelzplatte (17) zum Aufschmelzen des Ausgangsmaterials (15) und mit einem Heizblock (18) mit durchgehenden Bohrungen für die Zufuhr des schmelzflüssigen Kunststoffs zu einer oder mehreren Auftragsdüsen (19)ausgestattet ist.

8. Vorrichtung nach Anspruch 7, **dadurch gekennzeichnet, dass** die Auftragsdüsen (19) in der Wand des Kantenstützkeil-Formprofils (21) angeordnet sind.

9. Vorrichtung nach Anspruch 7 oder 8, **dadurch gekennzeichnet, dass** die Auftragsdüsen (19) Bohrungen im Kantenstützkeil-Formprofil (21) sind.

10. Vorrichtung nach einem der Ansprüche 7 bis 9, **dadurch gekennzeichnet, dass** das Kantenstützkeil-Formprofil (21) eine Vertiefung (22) aufweist und die Auftragsdüsen (19) in die Vertiefung (22) münden.

11. Vorrichtung nach Anspruch 10, **dadurch gekennzeichnet, dass** die Vertiefung (22) im Kantenstützkeil-Formprofil (21) entsprechend einer vorgegebenen Form und Dicke des herzustellenden Kantenstützkeils ausgebildet ist.

12. Vorrichtung nach einem der Ansprüche 4 bis 6, **dadurch gekennzeichnet, dass** eine weitere, zweite Anpressrolle (11) vorgesehen ist, die den streifenförmigen Zuschnitt (6) gegen das Kantenstützkeil- Formprofil (21) drückt.

13. Vorrichtung nach Anspruch 3 und einem der Ansprüche 4 bis 6 oder 12, **dadurch gekennzeichnet, dass** eine oder beide Führungsprofile (7, 7') bis zur Auftragseinheit (10) in Richtung der Berührungslinie des Transporttisches (2) mit dem senkrechten Bauteil (3) geneigt angeordnet sind.

14. Vorrichtung nach einem der Ansprüche 1 bis 13, **dadurch gekennzeichnet, dass** vor dem Einlass der Formgebungseinheit (1) und/oder innerhalb eines ersten Abschnitts (12) der Formgebungseinheit (1) vor der Auftragseinheit (10) eine Einrichtung zur Erwärmung des streifenförmigen Zuschnitts (6) vorhanden ist.

15. Vorrichtung nach einem der Ansprüche 1 bis 14, **dadurch gekennzeichnet, dass** nach der Formgebungseinheit (1) und/oder innerhalb eines zweiten Abschnitts (13) der Formgebungseinheit (1) nach der Auftragseinheit (10) eine Einrichtung zum Abkühlen des streifenförmigen Zuschnitts (6) vorhanden ist.

16. Vorrichtung nach einem der Ansprüche 1 bis 15, **dadurch gekennzeichnet, dass** eine Steuerungs- und Regeleinrichtung vorgesehen ist, welche je nach Art, Zusammensetzung und Dicke des Belagsmaterials die eventuell erforderliche Vorwärmung des streifenförmigen Zuschnitts (6), die Auftragstemperatur des schmelzflüssigen Kunststoffs oder Schmelzklebers und die Durchlaufzeit des streifenförmigen Zuschnitts (6) über den Antrieb der Transportkette (4) regelt und die eine Dateneingabe- und -Speichereinrichtung umfasst, mittels welcher Daten für den Herstellungsprozess des Wandhochzuges für jedes Belagsmaterial speicher- und abrufbar sind.

17. Vorrichtung nach einem der Ansprüche 1 bis 16, **dadurch gekennzeichnet, dass** eine Einrichtung zur Erfassung und Weiterleitung von Betriebskennzahlen an eine Datenverarbeitungseinheit vorgesehen ist.

## Claims

1. Device for producing a wall skirting that is prefabricated at the factory in the form of a concave skirting board for floor coverings made of plastic, PVC, rubber, linoleum or related materials in order to produce a moisture-tight wall transition,
• comprising a shaping unit (1) which has an inlet for a machine-generated strip-shaped blank (6) made of the floor covering material and a bending unit for forming a convex curved region in the strip-shaped blank (6) along the strip longitudinal axis thereof,
• and comprising a melting and application unit (10) for applying a permanently elastic edge support wedge to the convex curved region of the strip-shaped blank (6),
**characterized in that** the melting and application unit (10) has an edge support wedge moulding profile (21) which is connected to the shaping unit (1) via a transport means (4) for the strip-shaped blank (6) and which moulds the edge support wedge from molten plastic or hot-melt adhesive, calibrates it, and simultaneously attaches it to the convex curvature of the strip-shaped blank (6).

2. Device according to claim 1, **characterized in that** the shaping unit (1) has a horizontal transport table (2), a component (3) arranged perpendicular to the transport table (2), and an endlessly revolving, unidirectional transport means.

3. Device according to claim 2, **characterized in that** the unidirectional transport means is configured as a conveyor chain (4).

4. Device according to claim 3, **characterized in that** the shaping unit (1) is equipped with first contact pressure rollers (5), which are operatively connected to the conveyor chain (4), with a guide profile (7) on the transport table (2) adjacent to the conveyor chain (4), and with a further guide profile (7') on the perpendicular component (3).

5. Device according to claim 4, **characterized in that** the two guide profiles (7, 7') are L-shaped and can be adjusted via adjusting elements to predefined leg widths and to the predefined radius of curvature of the wall skirting.

6. Device according to claim 5, **characterized in that** the free profile legs (9, 9') of the guide profiles (7, 7') are designed to engage around the longitudinal edges (8, 8') of the strip-shaped blank (6).

7. Device according to one of the preceding claims, **characterized in that** the melting and application unit (10) is equipped with a storage chamber (14) for storing a starting material for the plastic or hot-melt adhesive which is permanently elastic and dimensionally stable at room temperature, with a pressurizable feed means for the starting material (15), with a melting plate (17) for melting the starting material (15), and with a heating block (18) which has through-bores for feeding the molten plastic to one or more application nozzles (19).

8. Device according to claim 7, **characterized in that** the application nozzles (19) are arranged in the wall of the edge support wedge moulding profile (21).

9. Device according to claim 7 or 8, **characterized in that** the application nozzles (19) are holes in the edge support wedge moulding profile (21).

10. Device according to any of claims 7 to 9, **characterized in that** the edge support wedge moulding profile (21) has a depression (22) and the application nozzles (19) open into the depression (22).

11. Device according to claim 10, **characterized in that** the depression (22) in the edge support wedge moulding profile (21) is configured in a manner corresponding to a predefined shape and thickness of the edge support wedge to be produced.

12. Device according to any of claims 4 to 6, **characterized in that** a further, second contact pressure roller (11) is provided which presses the strip-shaped blank (6) against the edge support wedge moulding profile (21).

13. Device according to claim 3 and any of claims 4 to 6 or 12, **characterized in that** one or both guide profiles (7, 7'), as far as the application unit (10), are arranged in a manner inclined in the direction of the line of contact of the transport table (2) with the perpendicular component (3).

14. Device according to any of claims 1 to 13, **characterized in that** a means for heating the strip-shaped blank (6) is provided upstream of the inlet of the shaping unit (1) and/or within a first section (12) of the shaping unit (1) upstream of the application unit (10).

15. Device according to any of claims 1 to 14, **characterized in that** a means for cooling the strip-shaped blank (6) is provided downstream of the shaping unit (1) and/or within a second section (13) of the shaping unit (1) downstream of the application unit (10).

16. Device according to any of claims 1 to 15, **characterized in that** a control unit is provided which, via the drive of the transport chain (4), controls any necessary preheating of the strip-shaped blank (6), the application temperature of the molten plastic or hot-melt adhesive and the pass-through time of the strip-shape blank (6) as a function of the type, composition and thickness of the floor covering material, and which comprises a data input and storage means, by which data relating to the method for producing the wall skirting can be stored and retrieved for each floor covering material.

17. Device according to any of claims 1 to 16, **characterized in that** a means for detecting and forwarding operating parameters to a data processing unit is provided.

## Revendications

1. Dispositif pour la fabrication d'un cavet préfabriqué en usine sous la forme d'une plinthe à gorge creuse pour des revêtements de sol en plastique, PVC, caoutchouc, linoléum ou matériaux apparentés, pour la réalisation d'un raccord au mur étanche à l'humidité,
• avec une unité de formage (1) possédant une entrée pour une découpe en forme de bande (6) produite à la machine dans le matériau de revêtement et une unité de cintrage pour emboutir une zone de cintrage convexe dans la découpe en forme de bande (6) le long de l'axe longitudinal de la bande,
• et avec une unité de fusion et d'application (10) destinée à appliquer une cale de soutien du bord durablement élastique sur la zone de cintrage convexe de la découpe en forme de bande (6),
**caractérisé en ce que** l'unité de fusion et d'application (10) présente un profilé de cale de soutien du bord mis en forme (21) relié à l'unité de formage (1) par une installation de transport (4) pour la découpe en forme de bande (6), qui forme la cale de soutien du bord à partir de matière plastique fondue liquide ou de colle thermofusible, la calibre et l'applique en même temps sur la courbure convexe de la découpe en forme de bande (6).

2. Dispositif selon la revendication 1, **caractérisé en ce que** l'unité de formage (1) présente un plateau de transport (2) horizontal, une pièce (3) disposée verticalement par rapport au plateau de transport (2) et une installation de transport unidirectionnelle tournant sans fin.

3. Dispositif selon la revendication 2, **caractérisé en ce que** l'installation de transport unidirectionnelle est réalisée comme une chaîne de convoyage (4).

4. Dispositif selon la revendication 3, **caractérisé en ce que** l'unité de formage (1) est équipée de premiers rouleaux presseurs (5) en liaison active avec la chaîne de convoyage (4), d'un profilé de guidage (7) sur le plateau de transport (2) près de la chaîne de convoyage (4) et d'un autre profilé de guidage (7') sur la pièce verticale (3).

5. Dispositif selon la revendication 4, **caractérisé en ce que** les deux profilés de guidage (7, 7') sont en forme de L et sont réglables à l'aide d'éléments de réglage à des largeurs de bras prédéterminées et au rayon de courbure prédéterminé du cavet.

6. Dispositif selon la revendication 5, **caractérisé en ce que** les bras de profilé libres (9, 9') des profilés de guidage (7, 7') sont conçus pour entourer les bords longitudinaux (8, 8') de la découpe en forme de bande (6).

7. Dispositif selon l'une des revendications précédentes, **caractérisé en ce que** l'unité de fusion et d'application (10) est équipée d'une chambre de réserve (14) pour l'approvisionnement en matière première pour la matière plastique de forme stable et durablement élastique à température ambiante ou la colle thermofusible, d'un dispositif d'alimentation pouvant être pressurisé pour la matière première (15), d'une plaque de fusion (17) pour la fusion de la matière première (15) et d'un bloc chauffant (18) avec des alésages traversants pour l'arrivée de la matière plastique fondue liquide vers une ou plusieurs buses d'application (19).

8. Dispositif selon la revendication 7, **caractérisé en ce que** les buses d'application (19) sont disposées dans la paroi du profilé de cale de soutien du bord mis en forme (21).

9. Dispositif selon la revendication 7 ou 8, **caractérisé en ce que** les buses d'application (19) sont des alésages dans le profilé de cale de soutien du bord mis en forme (21).

10. Dispositif selon l'une des revendications 7 à 9, **caractérisé en ce que** le profilé de cale de soutien du bord mis en forme (21) présente un creux (22) et les buses d'application (19) débouchent dans le creux (22).

11. Dispositif selon la revendication 10, **caractérisé en ce que** le creux (22) dans le profilé de cale de soutien du bord mis en forme (21) est conformé en fonction d'une forme et d'une épaisseur prédéterminées de la cale de soutien du bord à produire.

12. Dispositif selon l'une des revendications 4 à 6, **caractérisé en ce qu'**il est prévu un deuxième rouleau presseur (11) qui presse la découpe en forme de bande (6) contre le profilé de cale de soutien du bord mis en forme (21).

13. Dispositif selon la revendication 3 et l'une des revendications 4 à 6 ou 12, **caractérisé en ce qu'**un des profilés de guidage (7, 7') ou les deux sont inclinés jusqu'à l'unité d'application (10) dans le sens de la ligne de contact entre le plateau de transport (2) et la pièce verticale (3).

14. Dispositif selon l'une des revendications 1 à 13, **caractérisé en ce qu'**il est prévu en amont de l'entrée de l'unité de formage (1) et/ou à l'intérieur d'une première section (12) de l'unité de formage (1) en amont de l'unité d'application (10) une installation pour le chauffage de la découpe en forme de bande (6).

15. Dispositif selon l'une des revendications 1 à 14, **caractérisé en ce qu'**un dispositif pour le refroidissement de la découpe en forme de bande (6) est prévu en aval de l'unité de formage (1) et/ou à l'intérieur d'une deuxième section (13) de l'unité de formage (1) en aval de l'unité d'application (10).

16. Dispositif selon l'une des revendications 1 à 15, **caractérisé en ce qu'**il est prévu une installation de commande et de régulation qui régule, selon la nature, la composition et l'épaisseur du matériau de revêtement, le préchauffage éventuellement nécessaire de la découpe en forme de bande (6), la température d'application de la matière plastique fondue liquide ou de la colle thermofusible et le temps de déplacement de la découpe en forme de bande (6) par l'entraînement de la chaîne de convoyage (4) et qui comprend une installation d'entrée et d'enregistrement de données au moyen de laquelle des données peuvent être enregistrées et appelées pour le processus de fabrication du cavet avec chaque matériau de revêtement.

17. Dispositif selon l'une des revendications 1 à 16, **caractérisé en ce qu'**il est prévu un dispositif pour acquérir et transmettre des valeurs caractéristiques de fonctionnement à une unité de traitement de données.
